# EUROPÄISCHE PATENTSCHRIFT

(11) **EP 0 429 776 B1**
(45) Veröffentlichungstag und Bekanntmachung des Hinweises auf die Patenterteilung: **27.07.1994**
(21) Anmeldenummer: 90116954.0
(22) Anmeldetag: 04.09.1990
(51) Int. Cl.: B62D 35/00

(54) **Luftleitvorrichtung am Heck eines Kraftfahrzeuges**
Spoiler for the tail of a motor vehicle
Déflecteur aérodynamique pour l'arrière d'un véhicule à moteur

(30) Priorität: 23.11.1989 DE 3938737
(43) Veröffentlichungstag der Anmeldung: 05.06.1991
(73) Patentinhaber: Dr.Ing.h.c. F. Porsche Aktiengesellschaft, 70435 Stuttgart (DE)
(72) Erfinder: Moebius, Wolfgang, D-7141 Schwieberdingen (DE); Liese, Hartmut, Dipl.-Ing., D-7251 Mönsheim (DE); Quittenbaum, Jens, Dipl.-Ing., D-7251 Weissach-Flacht (DE)

(56) Entgegenhaltungen:
- EP-A- 0 226 778
- EP-A- 0 312 709
- DE-A- 3 615 584

## Beschreibung

Die Erfindung bezieht sich auf eine Luftleitvorrichtung am Heck eines Kraftfahrzeuges, insbesondere eines Personenwagens, die im hinteren Bereich eines Fließhecks angeordnet ist und sich im wesentlichen oberhalb einer Heckscheibe erstreckt.

Aus der DE-OS 35 11 809 ist eine Luftleitvorrichtung der eingangs genannten Gattung bekannt, die fest am Heck installiert ist und eine gute Funktion aufweist. Diese Luftleitvorrichtung dient dazu, einerseits den Luftwiderstandsbeiwert des Fahrzeuges zu mindern und andererseits den Abtrieb an der Hinterachse zu erhöhen.

Damit diese Luftleitvorrichtung beim Durchfahren einer bestimmten Gattung von automatischen Waschanlagen nicht beschädigt wird, ist ein aufwendiger Schwenkmechanismus für die Luftleitvorrichtung vorgesehen. Ferner wird durch die feststehende Luftleitvorrichtung die freie - auch stylistische - Gestaltung des Aufbaues im Bereich der Luftleitvorrichtung beeinträchtigt.

Der EP-A 0 226 778 ist eine an einem Stufenheck eines Kraftfahrzeuges angeordnete Luftleitvorrichtung zu entnehmen, die von einer versenkten Ruhestellung in eine ausgefahrene Betriebsstellung bewegbar ist und umgekehrt. Die Luftleitvorrichtung ist in der Ruhestellung innerhalb eines nischenförmigen Aufnahmeraumes des Heckdeckels angeordnet.

Dieser Anordnung haftet der Nachteil an, daß der an der Unterseite des Deckels angeordnete nischenförmige Aufnahmeraum relativ weit in den Kofferraum hineinragt, wodurch das Fassungsvermögen des Kofferraumes wesentlich reduziert wird.

Aufgabe der Erfindung ist es, an einer benachbart einer Heckscheibe eines Fließhecks angeordneten Luftleitvorrichtung solche Vorkehrungen zu treffen, daß ohne wesentliche Beeinträchtigung der freien Gestaltung des Aufbaues die Luftleitvorrichtung beim Durchfahren einer automatischen Waschanlage wirkungsvoll vor Beschädigungen geschützt ist und daß darüberhinaus das Fassungsvermögen des unterhalb des Fließhecks vorgesehenen Kofferraumes nur geringfügig verkleinert wird.

Erfindungsgemäß wird diese Aufgabe durch die kennzeichnenden Merkmale des Anspruchs 1 gelöst. Weitere, die Erfindung in vorteilhafter Weise ausgestaltete Merkmale enthalten die Unteransprüche.

Die mit der Erfindung hauptsächlich erzielten Vorteile sind darin zu sehen, daß durch die verstellbare Ausbildung der Luftleitvorrichtung und durch die Integration der Luftleitvorrichtung in das Fleißheck die freie Gestaltung des Aufbaus im Bereich der Luftleitvorrichtung nicht beeinträchtigt wird und außerdem sichergestellt ist, daß die eingefahrene Luftleitvorrichtung beim Durchfahren einer Waschanlage nicht beschädigt wird. Durch das Verwenden eines dünnwandigen Scheibenabschnittes als Luftleitvorrichtung wird erreicht, daß die Luftleitvorrichtung nur eine geringe Bauhöhe aufweist, und dementsprechend in der Ruhestellung in einem niedrigen Aufnahmeraum aufgenommen werden kann, wodurch das Fassungsvermögen des Kofferraumes nur unwesentlich eingeschränkt wird.

Ein Ausführungsbeispiel der Erfindung ist in der Zeichnung dargestellt und wird im folgenden näher beschrieben.

Es zeigt:
- Fig. 1: eine Schrägansicht von hinten auf den Heckbereich eines Personenwagens mit einer Luftleitvorrichtung,

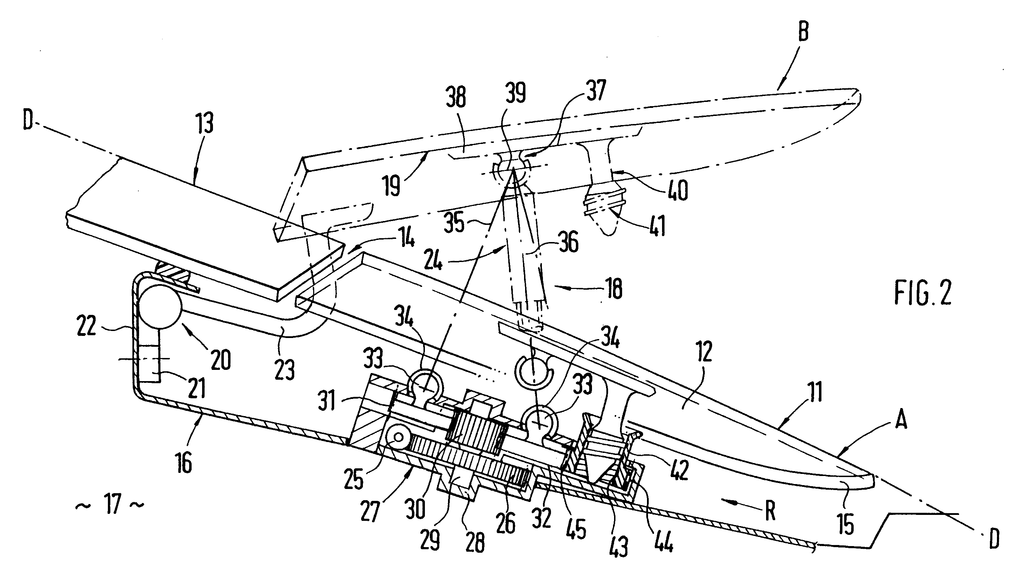

- Fig. 2: einen Schnitt nach der Linie II-II der Fig. 1,
- Fig. 3: eine Ansicht in Pfeilrichtung R der Fig. 2 mit der Verstelleinrichtung.

Ein Personenwagen 1 weist im dargestellten Bereich ein Fließheck 2 auf, das im wesentlichen durch eine mit einer Heckscheibe 3 versehene Heckklappe 4 gebildet wird.

Die Heckklappe 4 ist unter Vermittlung von Scharnieren schwenkbar an einem Dach 5 angelenkt und an den beiden Längsseiten an Seitenteile 6 des Aufbaus herangeführt. Der hintenliegende, untere Rand 7 der Heckklappe 4 reicht bis zu einer aufrechten Heckabschlußwand 8, an der Leuchteneinheiten 9 vorgesehen sind.

Die Heckscheibe 3 ist umfangsseitig von einem Einfaßrahmen 10 umgeben, der hohlträgerartig ausgebildet ist. Es besteht aber auch die Möglichkeit, daß die Heckscheibe 3 rahmenlos ausgebildet ist. Ferner ist heckseitig eine Luftleitvorrichtung 11 vorgesehen, die verstellbar ausgebildet ist und von einer ausgefahrenen Ruhestellung A in eine ausgefahrene Betriebsstellung B bewegbar ist und umgekehrt.

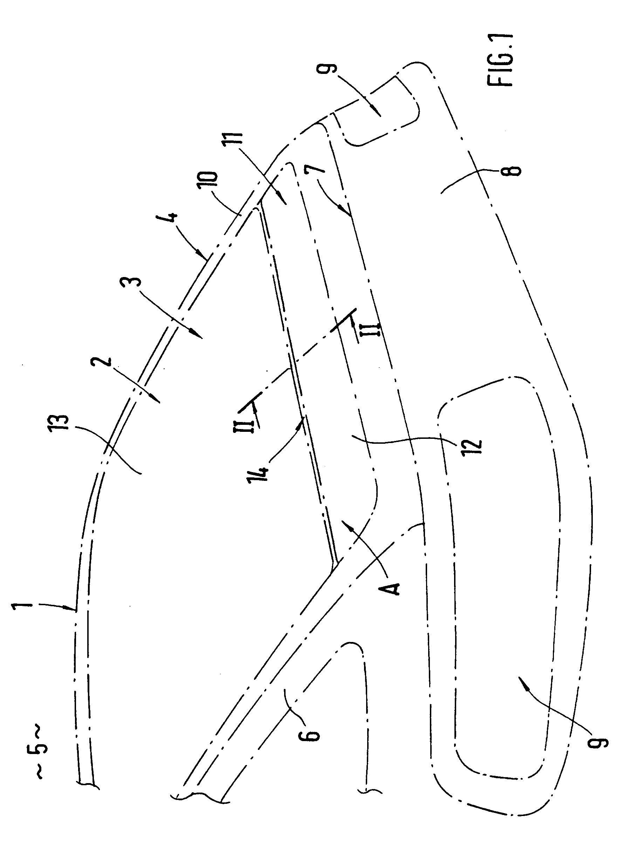

Gemäß Fig. 1 bildet die Luftleitvorrichtung 11 in der eingefahrenen Ruhestellung A einen Teilbereich 12 der Heckscheibe 3, wobei der Teilbereich 12 außenhautbündig zum angrenzenden Heckscheibenabschnitt 13 verläuft (gemeinsame Scheibenebene D-D).

Im Ausführungsbeispiel erstreckt sich der Teilbereich 12 benachbart dem hinteren unterliegenden Rand 7 der Heckklappe 4 bzw. des Einfaßrahmens 10. Der im Vergleich zum Heckscheibenabschnitt 13 relativ kleinflächige Teilbereich 12 ist in der Ruhestellung A sowohl in Fahrzeuglängs- als auch in Fahrzeugquerrichtung dem Formverlauf des angrenzenden großflächigen Heckscheibenabschnitts 13 angepaßt, so daß optisch gesehen eine Einheit von Heckscheibe 3 und Luftleitvorrichtung 11 gebildet wird. Zwischen dem Heckscheibenabschnitt 13 und der Luftleitvorrichtung 11 erstreckt sich eine schmale querverlaufende Fuge 14.

Die Luftleitvorrichtung 11 wird durch einen dünnwandigen Scheibenabschnitt 15 aus Glas, Kunststoff (Plexiglas) oder dgl. gebildet, wobei der Scheibenabschnitt 15 durchsichtig ausgebildet oder aber mit einer Bedruckung bzw. Einfärbung versehen ist.

Zur Aufnahme der Luftleitvorrichtung 11 in der eingefahrenen Ruhestellung A ist ein wannenförmig gestaltetes Teil 16 vorgesehen, das mit relativ geringem Abstand - niedrige Bauhöhe - zur außenliegenden Luftleitvorrichtung 11 verläuft. Das Teil 16 ist am oberen querverlaufenden Randbereich mit dem benachbarten, feststehenden Heckscheibenabschnitt 13 fest verbunden (beispielsweise durch Kleben). Darüber hinaus ist das wannenförmige Teil 16 im verbleibenden Umfangsbereich an den Einfaßrahmen 10 der Heckklappe 4 herangeführt und an diesem befestigt.

Durch das wannenförmige Teil 16 wird ein Wassereintritt in den darunterliegenden Kofferraum 17 bei hochgeschwenkter Luftleitvorrichtung (Betriebsstellung B) vermieden. Zum Bewegen der Luftleitvorrichtung 11 von der Ruhestellung A in die Betriebsstellung B und umgekehrt ist eine Verstelleinrichtung 18 vorgesehen, die einerseits am wannenförmigen Teil 16 und andererseits an der Innenseite 19 der Luftleitvorrichtung 11 angreift.

Ein dem oberen Heckscheibenabschnitt 13 zugekehrter Endbereich der Luftleitvorrichtung 11 ist über zumindest ein Scharnier 20 mit dem wannenförmigen Teil 16 gelenkig verbunden. Ein kurzer, vertikaler Scharnierarm 21 ist dabei an einen gleichlaufenden Flansch 22 des Teiles 16 befestigt, wogegen ein etwa L-förmiger Scharnierarm 23 mit seinem freien Ende an der Innenseite 19 der Luftleitvorrichtung 11 anliegt und dort mittels Kleben in Lage gehalten ist.

Gemäß einer ersten Ausführungsform umfaßt der Verstellmechanismus 18 eine Hubeinrichtung 24 mit einem an der Heckklappe 4 angeordneten nicht näher dargestellten Motor, der über ein Verbindungsglied 25 (Bowdenzug mit Wendel oder biegsame Welle) ein Zahnrad 26 einer Getriebeeinheit 27 antreibt. Die Hubeinrichtung 24 ist entfernt vom Scharnier 20 und zwar dahinterliegend angeordnet.

Die Getriebeeinheit 27 weist ein Gehäuse 28 auf, das bodenseitig am Teil 16 befestigt ist. Ferner umfaßt das Gehäuse 28 eine aufrechte Welle 29, die das Zahnrad 26 und ein darüberliegendes, gleichachsig angeordnetes Ritzel 30 trägt. Das Ritzel 30 wirkt mit zwei Zahnstangen 31, 32 zusammen, die sich beiderseits des Ritzels 30 erstrecken. Die beiden Zahnstangen 31, 32 werden je nach Drehrichtung des Ritzels 30 in Fahrzeugquerrichtung C bewegt. An den freien Enden der beiden Zahnstangen 31, 32 sind jeweils Kugelköpfe 33 befestigt, die mit korrespondierenden Kugelpfannen 34 von stangenförmigen Elementen 35, 36 zusammenwirken. Das andere Ende der Elemente 35, 36 ist über Kugelkopfverbindungen 37 gelenkig an die Luftleitvorrichtung 11 angeschlossen, wobei eine Platte 38 mit zwei Kugelköpfen 39 an der Innenseite 19 der Luftleitvorrichtung 11 angeklebt ist.

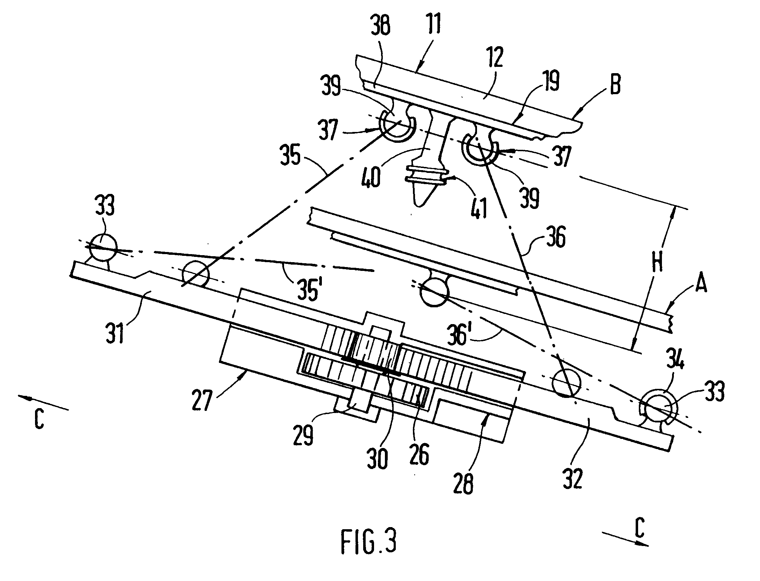

Zum Ausstellen der Luftleitvorrichtung 11 werden die beiden Zahnstangen 31, 32 nach innen in Richtung Ritzel 30 bewegt, wodurch sich die Elemente 35, 36 nach oben bewegen und die Luftleitvorrichtung 11 ausstellen. Soll die ausgestellte Luftleitvorrichtung 11 in ihre Ruhestellung A bewegt werden, so werden die Zahnstangen 31, 32 durch das Ritzel 30 nach außen (C) bewegt, wodurch die Luftleitvorrichtung eine Hubbewegung H nach unten ausführt. Die Elemente 35, 36 nehmen hierbei die Stellung 35', 36' (Fig. 3) ein.

Ferner ist an der Platte 38 ein nach unten ragender Zapfen 40 mit einer endseitigen kegelförmigen Anlaufschräge und angeformten Gewindegängen 41 vorgesehen, der mit einer drehbaren Buchse 42 des Getriebegehäuses 28 zusammenwirkt. Die drehbare Buchse 42 weist ein Innengewinde 43 und eine Außenverzahnung 44 auf, wobei die Außenverzahnung 44 mit einer korrespondierenden Verzahnung 45 einer der beiden Zahnstangen (z.B. 32) in Wirkverbindung steht.

Durch das Zusammenwirken der drehbaren Buchse 42 mit den Zapfen 40 der Luftleitvorrichtung 11 wird selbst eine vereiste Luftleitvorrichtung 11 nach oben in die Betriebsstellung B bewegt.

Die Verstellvorrichtung 18 kann beispielsweise auch als Viergelenkanordnung oder dgl. angeordnet sein (nicht näher dargestellt).

## Patentansprüche

1. Luftleitvorrichtung (11) am Heck eines Kraftfahrzeuges, inbesondere an einem Fließheck (2) eines Personenwagens (1), wobei die Luftleitvorrichtung (11) an einer eine Heckscheibe (3) aufnehmende Heckklappe (4) angeordnet ist, **dadurch gekennzeichnet,** daß die Luftleitvorrichtung (11) durch einen dünnwandigen Scheibenabschnitt (15) aus Glas, Kunststoff oder dgl. gebildet wird, der in seiner Ruhestellung (A) außenhautbündig zur - in Fahrtrichtung gesehen - vorgelagerten Heckscheibe (3) verläuft, wobei zwischen der Heckscheibe (3) und dem Scheibenabschnitt (15) eine schmale querverlaufende Fuge (14) vorgesehen ist und daß der Scheibenabschnitt (15) unter Vermittlung einer Verstelleinrichtung (18) in seine hochgeschwenkte Betriebsstellung (B) bewegbar ist.

2. Luftleitvorrichtung nach Anspruch 1, **dadurch gekennzeichnet,** daß unterhalb der eingefahrenen Luftleitvorrichtung (11) ein wannenförmiges Teil (16) zur Aufnahme der Luftleitvorrichtung (11) vorgesehen ist.

3. Luftleitvorrichtung nach Anspruch 2, **dadurch gekennzeichnet,** daß das wannenförmige Teil (16) mit dem angrenzenden oberen Heckscheibenabschnitt (13) und/oder einen randseitigen Einfaßrahmen (10) der Heckscheibe (3) fest verbunden ist.

4. Luftleitvorrichtung nach Anspruch 1, **dadurch gekennzeichnet,** daß die Verstelleinrichtung (18) zum Bewegen der Luftleitvorrichtung (11) einerseits am wannenförmigen Teil (16) und andererseits am Scheibenabschnitt (15) angreift.

5. Luftleitvorrichtung nach Anspruch 4, dadurch gekennzeichnet, daß ein dem oberen Heckscheibenabschnitt (13) zugekehrter Enbereich der Luftleitvorrichtung (11) über zumindest ein Scharnier (20) drehbar mit dem wannenförmigen Teil (15) verbunden ist und daß - in Längsrichtung gesehen - entfernt vom Scharnier (20) eine Hubeinrichtung (24) zum Ausstellen bzw. Einfahren der Luftleitvorrichtung (11) vorgesehen ist.

6. Luftleitvorrichtung nach Anspruch 5, **dadurch gekennzeichnet,** daß die Hubeinrichtung (24) ein wannenseitig angeordnetes, von einem Verbindungsglied (25) angetriebenes Zahnrad (26) umfaßt, das ein darüberliegendes gleichachsig angeordnetes Ritzel (30) antreibt, weiches mit zwei Zahnstangen (31, 32) zusammenwirkt, wobei die freien Enden der beiden Zahnstangen (31, 32) über stangenförmige Elemente (35, 36) mit dem Luftleitelement (11) in Wirkverbindung stehen.

7. Luftleitvorrichtung nach Anspruch 6, **dadurch gekennzeichnet,** daß die stangenförmigen Elemente (35, 36) in Längsrichtung einstellbar sind und über Kugelkopfverbindungen (37) mit den Zahnstangen (31, 32) und der Luftleitvorrichtung (11) verbunden sind.

## Claims

1. A spoiler (11) at the tail of a motor vehicle, in particular a fastback (2) of a passenger car (1), wherein the spoiler (11) is arranged on a tailgate (4) receiving the rear window (3), **characterized in that** the spoiler (11) is formed by a thin-walled window-portion (15) of glass, plastics material or the like extending in the rest position (**A**) thereof flush with the outer skin towards the rear window (3) mounted in front as viewed in the direction of travel, wherein a narrow, transversely extending joint (14) is provided between the rear window (3) and the window portion (15), and the window portion (15) is movable into the raised operating position (**B**) thereof by means of an adjustment device (18).

2. A spoiler according to Claim 1, **characterized in that** a trough-shaped part (16) is provided below the retracted spoiler (11) for receiving the said spoiler (11).

3. A spoiler according to Claim 2, **characterized in that** the trough-shaped part (16) is securely connected to the adjacent upper portion (13) of the rear window and/or [to] a bordering frame (10) on the edge of the rear window (3).

4. A spoiler according to Claim 1, **characterized in that** the adjustment device (18) for moving the spoiler (11) engages on the trough-shaped part (16) on one side and on the window portion (15) on the other side.

5. A spoiler according to Claim 4, **characterized in that** an end region of the spoiler (11) facing the upper portion (13) of the rear window is connected to the trough-shaped part (15) [*sic - recte* 16]so as to be rotatable by way of at least one hinge (20), and a lifting device (24) for pushing out or retracting the spoiler (11) is provided at a distance from the hinge (20) as viewed in the longitudinal direction.

6. A spoiler according to Claim 5, **characterized in that** the lifting device (24) comprises a gearwheel (26) arranged on the side of the trough and driven by a connecting member (25) and driving a coaxially arranged pinion (30) situated thereabove and cooperating with two toothed racks (31, 32), wherein the free ends of the two toothed racks (31, 32) are operatively connected to the spoiler (11) by way of rod-shaped members (35, 36).

7. A spoiler according to Claim 6, **characterized in that** the rod-shaped members (35, 36) are adjustable in the longitudinal direction and are connected to the toothed racks (31, 32) and the spoiler (11) by way of ball-head joints (37).

## Revendications

1. Déflecteur (11) monté à l'arrière d'un véhicule automobile, en particulier l'arrière aérodynamique (2) d'une voiture de tourisme (1), le déflecteur (11) étant placé sur un hayon arrière (4) logeant une vitre arrière (3), caractérisé en ce que le déflecteur (11) est formé par une partie de vitre (15) à paroi mince, en verre, matière plastique ou similaire, qui, dans sa position de repos (A), est alignée avec l'enveloppe extérieure de la vitre arrière (3) placée devant -dans le sens de la marche-, un joint (14) étroit transversal étant prévu entre la vitre arrière (3) et la partie de vitre (15) et en ce que la partie de vitre (15) est déplaçable dans sa position de fonctionnement (B) pivotée vers le haut, par l'intermédiaire d'un dispositif de réglage (18).

2. Déflecteur selon la revendication 1, caractérisé en ce qu'au-dessous du déflecteur (11) en position rentrée, il est prévu un élément (16) en forme de bac destiné à loger le déflecteur (11).

3. Déflecteur selon la revendication 2, caractérisé en ce que l'élément (16) en forme de bac est relié fixement avec la partie de vitre arrière (13) supérieure adjacente et/ou un cadre de monture (10) côté bordure de la vitre arrière (3).

4. Déflecteur selon la revendication 1, caractérisé en ce que le dispositif de réglage (18) destiné à déplacer le déflecteur (11) agit d'une part sur l'élément (16) en forme de bac et d'autre part sur la partie de vitre (15).

5. Déflecteur selon la revendication 4, caractérisé en ce qu'une zone terminale du déflecteur (11), tournée vers la partie de vitre arrière (13) supérieure, est reliée par au moins une charnière (20), de manière à pouvoir tourner, avec l'élément (15) en forme de bac et en ce qu'il est prévu, éloigné de la charnière (20) - vu dans le sens longitudinal - un dispositif de levage (24) destiné au déploiement ou à l'introduction du déflecteur (11).

6. Déflecteur selon la revendication 5, caractérisé en ce que le dispositif de levage (24) comporte une roue dentée (26) placée côté bac, entraînée par un organe de liaison (25), laquelle roue dentée entraîne un pignon (30) placé au-dessus, sur le même axe, lequel pignon coopère avec deux crémaillères (31, 32), les extrémités libres des deux crémaillères (31, 32) étant en liaison active avec le déflecteur (11), par l'intermédiaire d'éléments (35, 36) en forme de tige.

7. Déflecteur selon la revendication 6, caractérisé en ce que les éléments (35, 36) en forme de tige sont réglables dans la direction longitudinale et sont reliés par des liaisons à tête sphérique (37), avec les crémaillères (31, 32) et avec le déflecteur (11).
